# EUROPÄISCHE PATENTSCHRIFT

(11) **EP 2 107 224 B1**
(45) Veröffentlichungstag und Bekanntmachung des Hinweises auf die Patenterteilung: **16.05.2012**
(21) Anmeldenummer: 09004525.3
(22) Anmeldetag: 30.03.2009
(51) Int. Cl.: F02B 23/02, F02B 37/00

(54) **Selbstzündende Brennkraftmaschine**
Compression ignition combustion engine
Moteur à combustion interne à allumage par compression

(30) Priorität: 01.04.2008 DE 102008016600
(43) Veröffentlichungstag der Anmeldung: 07.10.2009
(73) Patentinhaber: VOLKSWAGEN AG, 38436 Wolfsburg (DE)
(72) Erfinder: Pott, Ekkehard, 38518 Gifhorn (DE); Hahne, Bernd, 38126 Braunschweig (DE); Vanhaelst, Robin, 38442 Wolfsburg (DE)

(56) Entgegenhaltungen:
- WO-A1-97/18384
- US-A1- 2004 149 255
- US-B1- 6 276 334

## Beschreibung

Die Erfindung betrifft eine selbstzündende Brennkraftmaschine, insbesondere Dieselmotor, mit mindestens einem Abgasturbolader (ATL) und mindestens einem Arbeitszylinder, gemäß dem Oberbegriff des Patentanspruchs 1.

Bei aufgeladene Dieselmotoren, z.B. mit Mono- oder Biturboaufladung ergibt sich bei hohen Aufladegraden (> 2 bar Ladedruck absolut) im Nennmoment- sowie am Nennleistungspunkt das Problem eines hohen Kompressionsenddruckes. Durch einen höheren Kompressionsenddruck kann bei einem bestimmten maximal erlaubten Spitzendruck weniger Kraftstoff isochor umgesetzt werden, wodurch der spezifische Verbrauch ansteigt und ein Leistungsverlust auftritt. Bei höheren Aufladegrade steigt der Kompressionsenddruck noch weiter an. Bei einer Spitzendruckbegrenzung auf beispielsweise 170 bar kann weniger Kraftstoffstoff isochor umgesetzt werden. Dadurch steigt der spez. Verbrauch von Kraftstoff und sinkt die von der Brennkraftmaschine abgegebene Leistung.

Aus der DE 103 52 737 A1 eine Verbrennungskraftmaschine mit einem einen veränderbaren Verdichtungsraum aufweisenden Verbrennungsraum bekannt, welcher eine zylinderförmige Gestalt aufweist. Um mit einfachen Mitteln einen höheren Wirkungsgrad bei wechselnden Lasten sowie eine Verringerung der Klopfneigung zu erzielen, wird vorgeschlagen, dass zur Veränderung des Verdichtungsraums der Verbrennungsraum längenveränderbar ausgebildet ist. Beim Betrieb eines Dieselmotors wird das Verdichtungsverhältnis von größer 20:1 auf Werte von 16:1 oder kleiner abgesenkt.

Aus der US 5,557,503 B2 ist ein Verfahren zum Betreiben eines Zweitaktdieselmotors bekannt, welches sich zum Ziel gesetzt hat den Kraftstoffverbrauch und die Stickoxidemissionen (NOₓ) abzusenken. Hierfür ist es vorgesehen, an der Brennkraftmaschine ein Verdichtungsverhältnis in den Brennkammern zwischen 16,5:1 bis ca. 19:1 einzustellen. Diese Maßnahme soll gemeinsam mit weiteren Maßnahmen dazu führen, dass die NOₓ-Emissionen im Abgas und der Kraftstoffverbrauch unter vorbestimmten Werten liegen sollen.

Aus der EP 0 561 740 B1 ist ein Verfahren zum Betreiben eines Dieselmotors und ein Dieselmotor bekannt, wobei das Verdichtungsverhältnis in einem Bereich von 16:1 bis 20:1, vorzugsweise 18:1 bis 20:1 eingestellt wird und der Zylinderinhalt auf einen Druck von ca. 180 bar verdichtet wird. Hierdurch sollen bei einem erhöhten Wirkungsgrad die NOₓ-Emissionen verringert sein.

Schließlich ist aus der EP 1 315 889 B1 ein Verfahren zur Steuerung des Verdichtungsverhältnisses an einer aufgeladenen Verbrennungskraftmaschine bekannt, bei welcher aus einer nicht näher bezifferten Verdichtungsendtemperatur im Rahmen einer Vorsteuerung ein wirkungsgradoptimales Verdichtungsverhältnis ermittelt und eingestellt wird.

Aus der US 200410149255 A1 ist eine Brennkraftmaschine mit einem Abgasturbolader und mindestens einem Arbeitszylinder und einem geometrischen Verdichtungsverhältnis von 16 bis 17:1 bekannt.

Der Erfindung liegt die Aufgabe zugrunde, eine selbstzündende Brennkraftmaschine der o.g. Art hinsichtlich Verbrauch, Schadstoffemissionen und Leistung zu verbessern.

Diese Aufgabe wird erfindungsgemäß durch eine selbstzündende Brennkraftmaschine der o.g. Art mit den in Anspruch 1 gekennzeichneten Merkmalen gelöst. Vorteilhafte Ausgestaftungen der Erfindung sind in den weiteren Ansprüchen beschrieben.

Dazu ist es bei einer selbstzündende Brennkraftmaschine der o.g. Art erfindungsgemäß vorgesehen, dass die Brennkraftmaschine derart ausgebildet ist, dass ein Ladedruck im Arbeitszylinder im Nennmoment und/oder Nennleistungspunkt größer ca. 2,5 bar absolut, ein Spitzendruck im Arbeitszylinder kleiner ca. 200 bar, eine spezifische Leistung größer als ca. 60 kW/l, ein spezifisches Motormoment größer als ca.150 Nm/l und ein geometrisches Verdichtungsverhältnis kleiner als ca.17:1 ist.

Dies hat den Vorteil, dass ohne Mehrverbrauch von Kraftstoff eine Leistungssteigerung erzielt wird, die.bei hochaufgeladenen Dieselmotoren besonders groß ist.

Zweckmäßigerweise beträgt das geometrische Verdichtungsverhältnis zwischen ca. 16,5:1 und 14,5:1, vorzugsweise 16:1 bis 15:1.

Das Nennmoment der Brennkraftmaschine gemäß vorliegender Erfindung ist das maximale abgegebene Drehmoment (M_{dmax}), der Nennleistungspunkt ist der Betrietsspunkt mit der maximalen Leistungsabgabe (pₑₘₐₓ).

In einer bevorzugten Ausführungsform ist die Brennkraftmaschine derart ausgebildet, dass im Nennleistungspunkt eine Kompressionsendtemperatur kleiner oder gleich ca. 1127°C ist, vorzugsweise kleiner oder gleich ca. 927°C, insbesondere kleiner oder gleich ca. 727°C und gleichzeitig eine Temperatur vor dem ATL kleiner oder gleich ca. 800°C, vorzugsweise kleiner oder gleich ca. 830°C bis 850°C, insbesondere kleiner oder gleich ca.800°C Ist.

In einer bevorzugten Weiterbildung der Erfindung ist die Brennkraftmaschine derart ausgebildet, dass im Nennleistungspunkt ein Kompressionsenddruck kleiner oder gleich ca. 100 bar bis 140 bar, vorzugsweise ca.110 bar bis 120 bar ist und gleichzeitig eine Temperatur vor ATL kleiner oder gleich ca. 800°C bis 850°C ist.

In einer bevorzugten Weiterbildung der Erfindung ist die Brennkraftmaschine derart ausgebildet, dass im Nennleistungspunkt eine Brennraumtemperatur kleiner oder gleich ca. 2127°C ist, vorzugsweise kleiner oder gleich ca. 1927°C, Insbesondere kleiner oder gleich. 1727°C ist und gleichzeitig eine Temperatur vor ATL kleiner oder gleich ca. 800°C bis 850°C ist.

In einer bevorzugten Weiterbildung der Erfindung ist die Brennkraftmaschine derart ausgebildet, dass im Nennleistungspunkt ein spätester Spritzbeginn bei ca. 20°KW bis ca. 10°KW, vorzugsweise ca. 15°KW vor OT liegt und gleichzeitig eine Temperatur vor ATL kleiner oder gleich ca. 800°C bis 860°C ist, vorzugsweise etwa 830°C bis 850°C.

Zweckmäßigerweise ist die Brennkraftmaschine derart ausgebildet, dass der Spitzendruck im Arbeitszylinder kleiner ca. 180 bar ist, vorzugsweise ca. 170 bar bis 164 bar.

In einer bevorzugten Ausführungsform ist die Brennkraftmaschine derart ausgebildet, dass der Ladedruck im Arbeitszylinder im Nennmoment und/oder Nennleistungspunkt größer ca. 3,0 bar ist, vorzugsweise größer ca. 3,5 bar oder 4,0 bar absolut ist.

Die Erfindung wird im Folgenden anhand der Zeichnung näher erläutert. Diese zeigt in
- Fig. 1: eine graphische Darstellung des Zylinderinnendruckes, der Umwandlungsenthalpie (Energieinhalt) und der Wärmefreisetzungsrate über den Kurbelwinkel,
- Fig. 2: eine graphische Darstellung des Kompressionsinnendruckes über den Ladedruck für zwei verschiedene geometrische Verdichtungsverhältnisse und
- Fig. 3: eine graphische Darstellung des Zylinderinnendruckes über den Kurbelwinkel.

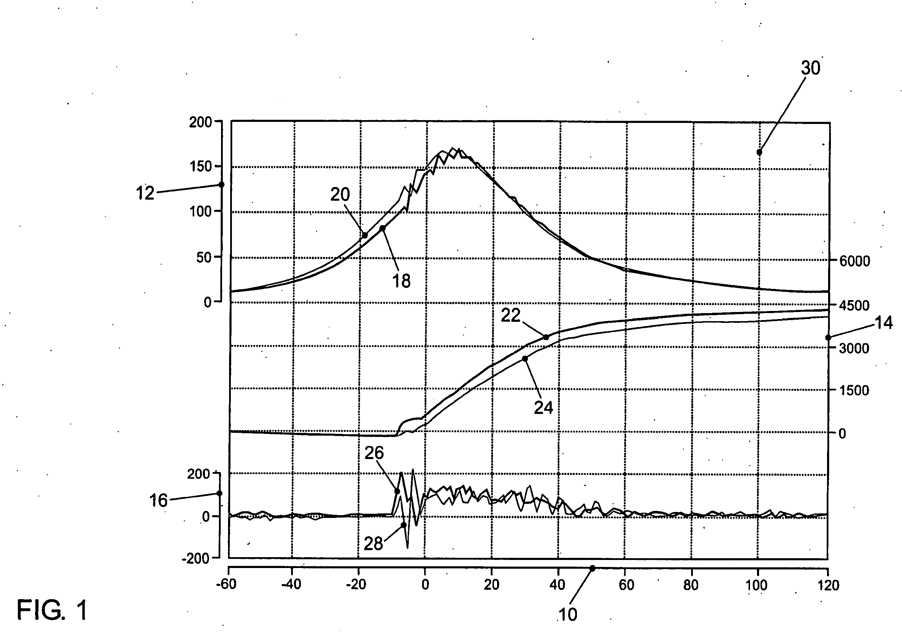

Fig. 1 veranschaulicht den Einfluss des Verdichtungsverhältnisses auf die Nennleistung einer erfindungsgemäßen Brennkraftmaschine. Auf einer horizontalen Achse 10 ist ein Kurbelwinkel in Grad aufgetragen, auf einer ersten vertikalen Achse 12 ist ein Zylinderinnendruck in bar, auf einer zweiten vertikalen Achse 14 ist eine Umwandlungsenthalpie (Energieinhalt) in kJ/m³ und auf einer dritten vertikalen Achse 16 ist eine Wärmefreisetzungsrate in kJ/m³deg aufgetragen. Ein erster Graph 18 zeigt den Verlauf des Zylinderinnendruckes 12 über den Kurbelwinkel 10 für ein geometrisches Verdichtungsverhältnis von 15,5. Ein zweiter Graph 20 zeigt den Verlauf des Zylinderinnendruckes 12 über den Kurbelwinkel 10 für ein geometrisches Verdichtungsverhältnis von 16,5. Ein dritter Graph 22 zeigt den Verlauf der Umwandlungsenthalpie 14 über den Kurbelwinkel 10 für ein geometrisches Verdichtungsverhältnis von 15,5. Ein vierter Graph 24 zeigt den Verlauf der Umwandlungsenthalpie 14 über den Kurbelwinkel 10 für ein geometrisches Verdichtungsverhältnis von 16,5. Ein fünfter Graph 26 zeigt den Verlauf der Wärmefreisetaungsrate 18 über den Kurbelwinkel 10 für ein geometrisches Verdichtungsverhältnis von 15,5. Ein sechster Graph 28 zeigt den Verlauf der Wärmefreisetzungsrate 18 über den Kurbelwinkel 10 für ein geometrisches Verdichtungsverhältnis von 16,5.

Eine vertikale Linie 30 kennzeichnet einen Kurbelwinkel 10 von 101 Grad. Für das geometrische Verdichtungsverhältnis von 15,5 beträgt bei einem Kurbelwinkel von 101 Grad der Wert für die Wärmefreisetzuhgsrate 16 (fünfter Graph 26) 8,060 kJ/m³deg, der Wert für die Umwandlungsenthalpie 14 (dritter Graph 22) 4130,268 kJ/m³ und der Wert für den Zyiinderinnendruck 12 (erster Graph 18) 16,091 bar. Für das geometrische Verdichtungsverhältnis von 16,5 beträgt bei einem Kurbelwinkel von 101 Grad der Wert für die Wärmefreisetzungsrate 16 (sechster Graph 28) 1,780 kJ/m³deg, der Wert für die Umwandlungsenthalpie 14 (vierter Graph 24) 3873,688 kJ/m³ und der Wert für den Zylinderinnendruck 12 (zweiter Graph 20) 15,719 bar.

Die Indiziergrößen für die Graphen gemäß Fig. 1 lauten wie folgt:

| | geom. Verdichtungsverhältnis ε = 15,5 | geom. Verdichtungsverhältnis ε = 16,5 |
|---|---|---|
| Spritzbeginn | -21°KW | -17,4°KW |
| AQ 0 (Brennbeginn) | -11°KW | -5,25°KW |
| Al 05 % | -7,5°KW | -3°KW |
| Al 10% | -1,75°KW | 1°KW |
| Al 50% | 15,25°KW | 19,25°KW |
| Al 90 % | 50°KW | 52,25°KW |
| Einspritzmenge | 63,7 mg/Hub | 62,3 mg/Hub |
| LEISTUNG | 178 kW | 172 kW |

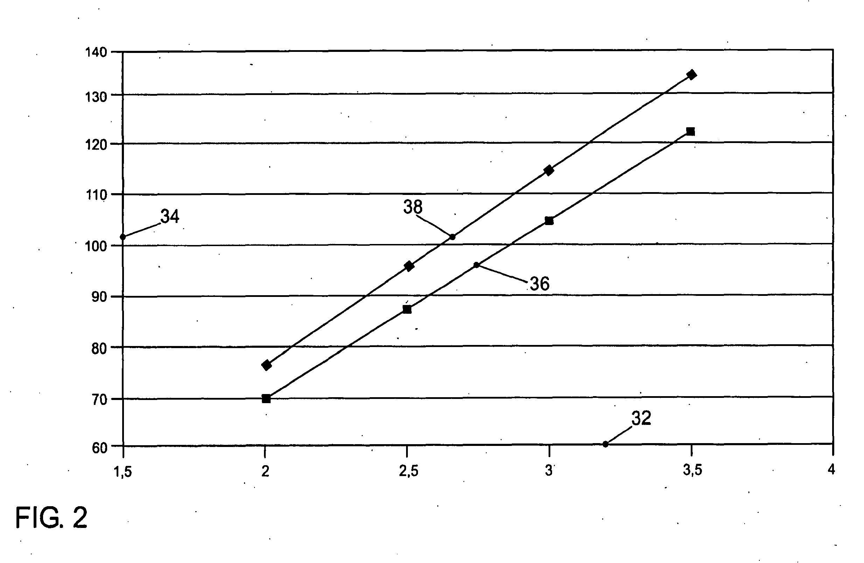

In Fig. 2 ist auf einer horizontalen Achse 32 ein Ladedruck in bar und auf einer vertikalen Achse 34 ein Kompressionsenddruck in bar aufgetragen. Ein siebter Graph 36 zeigt den Verlauf des Kompressionsenddruckes 34 über den Ladedruck 32 für ein geometrisches Verdichtungsverhältnis von 15,5. Ein achter Graph 38 zeigt den Verlauf des Kompressionsenddruckes 34 über den Ladedruck 32 für ein geometrisches Verdichtungsverhältnis von 16,5. Bei höheren Aufladegraden 32 steigt der Kompressionsenddruck 34. Bei einer Spitzendruckbegrenzung auf beispielsweise 170 bar kann weniger Kraftstoff isochor umgesetzt werden. Dadurch steigt der spezifische Verbrauch und sinkt die Leistung. Erfindungsgemäß ist es daher vorgesehen, das geometrische Verdichtungsverhältnis (ε) abzusenken.

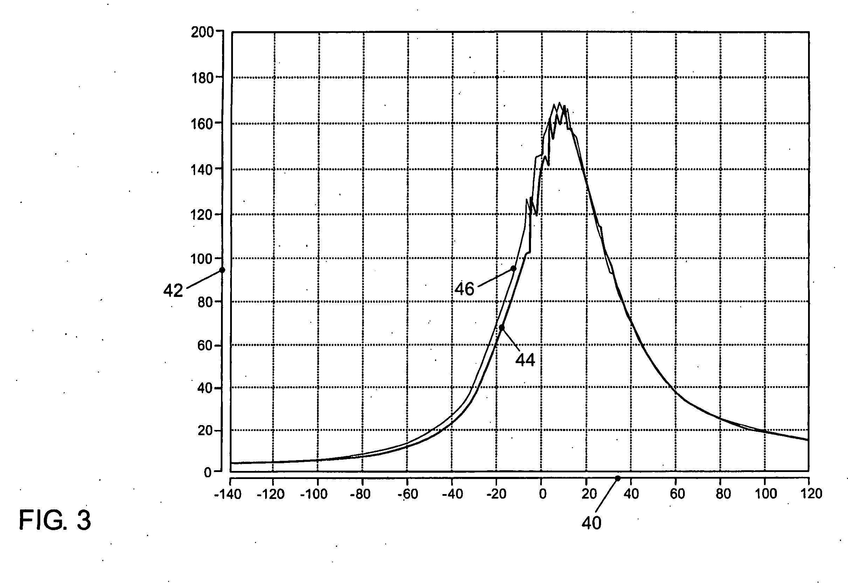

Fig. 3 veranschaulicht den Einfluss des Verdichtungsverhältnisses auf die Nennleistung einer erfindungsgemäßen Brennkraftmaschine. Auf einer horizontalen Achse 40 ist der Kurbelwinkel in Grad und auf einer vertikalen Achse 42 ist der Zylinderinnendruck in bar aufgetragen. Ein neunter Graph 44 zeigt den Verlauf des Zylinderinnendruckes 42 über den Kurbelwinkel 40'für ein geometrisches Verdichtungsverhältnis von 15,5. Ein zehnter Graph 46 zeigt den Verlauf des Zylinderinnendruckes 42 über den Kurbelwinkel 40 für ein geometrisches Verdichtungsverhältnis von 16,5.

Die Parameter zu den Graphen von Fig. 3 lauten:

| | geom. Verdichtungsverhältnis ε = 15,5 | geom. Verdichtungsverhältnis ε = 16,5 |
|---|---|---|
| Luftmasse | 1.141 mg/Hub | 1.138 mg/Hub |
| Ladedruck | 2.609 mbar | 2.620 mbar |
| P_Max | 169 bar | 171 bar |
| T_vor Turbine | 833°C | 841 °C |
| Spritzbeginn | -21°KW | -17,4°KW |
| Einspritzmenge | 63,7 mg/Hub | 62,3 mg/Hub |
| spez. Verbrauch | 257 g/kWh | 260 g/kWh |
| LEISTUNG | 178 kW | 172 kW |

## Patentansprüche

1. Selbstzündende Brennkraftmaschine, insbesondere Dieselmotor, mit mindestens einem Abgasturbolader (ATL) und mindestens einem Arbeitszylinder, **dadurch gekennzeichnet, dass** die Brennkraftmaschine derart ausgebildet ist, dass ein Ladedruck (32) im Arbeitszylinder im Nennmoment und/oder Nennleistungspunkt größer ca. 2,5 bar absolut, ein Spitzendruck im Arbeitszylinder kleiner ca. 200 bar, eine spezifische Leistung größer als ca. 60 kW/l, ein spezifisches Motormoment größer als ca.150 Nm/l und ein geometrisches Verdichtungsverhältnis kleiner als ca. 17:1 ist.

2. Selbstzündende Brennkraftmaschine nach Anspruch 1, **dadurch gekennzeichnet, dass** das geometrische Verdichtungsverhältnis zwischen ca. 16,5,1 und 14,5:1 beträgt insbesondere ca. 16:1 oder ca. 15,5:1 oder 15:1.

3. Selbstzündende Brennkraftmaschine nach wenigstens einem der vorhergehenden Ansprüche, **dadurch gekennzeichnet, dass** die Brennkraftmaschine derart ausgebildet ist, dass im Nennleistungspunkt eine Kompressionsendtemperatur kleiner oder gleich ca. 1127°C ist, vorzugsweise kleiner oder gleich ca. 927°C, insbesondere kleiner oder gleich ca. 727°C und gleichzeitig eine Temperatur vor dem ATL kleiner oder gleich ca. 800°C, vorzugsweise kleiner oder gleich ca. 830°C bis 850°C, insbesondere kleiner oder gleich ca.800°C ist.

4. Selbstzündende Brennkraftmaschine nach wenigstens einem der vorhergehenden Ansprüche, **dadurch gekennzeichnet, dass** die Brennkraftmaschine derart ausgebildet ist, dass im Nennleistungspunkt ein Kompressionsenddruck kleiner oder gleich ca. 100 bar bis 140 bar, vorzugsweise ca.110 bar bis 120 bar ist und gleichzeitig eine Temperatur vor ATL kleiner oder gleich ca. 800°C bis 850°C ist.

5. Selbstzündende Brennkraftmaschine nach wenigstens einem der vorhergehenden Ansprüche, **dadurch gekennzeichnet, dass** die Brennkraftmaschine derart ausgebildet ist, dass im Nennleistungspunkt eine Brennraumtemperatur kleiner oder gleich ca. 2127°C ist, vorzugsweise kleiner oder gleich ca. 1927°C, insbesondere kleiner oder gleich 1727°C ist und gleichzeitig eine Temperatur vor ATL kleiner oder gleich ca. 800°C bis 850°C ist.

6. Selbstzündende Brennkraftmaschine nach wenigstens einem der vorhergehenden Ansprüche, **dadurch gekennzeichnet, dass** im Nennleistungspunkt ein spätester Spritzbeginn bei ca. 20°KW bis ca. 10°KW, vorzugsweise ca. 15°KW vor OT liegt und gleichzeitig eine Temperatur vor ATL kleiner oder gleich ca. 800°C bis 880°C ist, vorzugsweise etwa 830°C bis 850°C.

7. Selbstzündende Brennkraftmaschine nach wenigstens einem der vorhergehenden. Ansprüche, **dadurch gekennzeichnet, dass** die Brennkraftmaschine derart ausgebildet ist, dass der Spltzendruck im Arbeitszylinder kleiner ca. 180 bar ist, vorzugsweise ca. 170 bar bis 160 bar ist.

8. Selbstzündende Brennkraftmaschine nach wenigstens einem der vorhergehenden Ansprüche, **dadurch gekennzeichnet, dass** die Brennkraftmaschine derart ausgebildet ist, dass der Ladedruck Im Arbeitszylinder im Nennmoment und/oder Nennleistungspunkt größer ca. 3,0 bar ist, vorzugsweise größer ca. 3,5 bar oder 4,0 bar absolut Ist.

## Claims

1. Compression ignition combustion engine, in particular diesel engine, having at least one exhaust gas turbocharger (exhaust gas turbocharger) and at least one working cylinder, **characterized in that** the internal combustion engine is embodied in such a way that a charge pressure (32) in the working cylinder at the rated torque and/or rated capacity point is greater than approximately 2.5 bar absolute, a peak pressure in the working cylinder is less than approximately 200 bar, a specific capacity is greater than approximately 60 kW/l, a specific engine torque is greater than approximately 150 Nm/l and a geometric compression ratio is less than approximately 17:1.

2. Compression ignition combustion engine according to Claim 1, **characterized in that** the geometric compression ratio is between approximately 16.5:1 and 14.5:1, in particular approximately 16:1 or approximately 15.5:1 or 15:1.

3. Compression ignition combustion engine according to at least one of the preceding claims, **characterized in that** the internal combustion engine is embodied in such a way that at the rated capacity point a final compression temperature is less than or equal approximately 1127°C, preferably less than or, equal approximately 927°C, in particular less than or equal to approximately 727°C, and at the same time a temperature upstream of the exhaust gas turbocharger is less than or equal to approximately 800°C, preferably less than or equal to approximately 830°C to 850°C, in particular less than or equal to approximately 800°C.

4. Compression ignition combustion engine according to at least one of the preceding claims, **characterised in that** the internal combustion engine is embodied in such a way that at the rated capacity point a final compression pressure is less than or equal to approximately 100 bar to 140 bar, preferably approximately 110 bar to 120 bar, and at the same time a temperature upstream of the exhaust gas turbocharger is less than or equal to approximately 800°C to 850°C.

5. Compression ignition combustion engine according to at least one of the preceding claims, **characterized in that** the internal combustion engine is embodied in such a way that at the rated capacity point a combustion chamber temperature is less than or equal to approximately 2127°C, preferably less than or equal to approximately 1927°C , in particular less than or equal to 1727°C and at the same time a temperature upstream of the exhaust gas turbocharger is less than or equal to approximately 800°C to 850°C.

6. Compression ignition combustion engine according to at least one of the preceding claims, **characterized in that** at the rated capacity point a latest start of injection is at approximately 20°CA to approximately 10°CA, preferably approximately 15°CA before the top dead centre, and at the same time a temperature upstream of the exhaust gas turbocharger is less than or equal to approximately 800°C to 860°C, preferably approximately 830°C to 850°C.

7. Compression ignition combustion engine according to at least one of the preceding claims, **characterized in that** the internal combustion engine is embodied in such a way that the peak pressure in the working cylinder is less than approximately 180 bar, and is preferably approximately 170 bar to 160 bar.

8. Compression ignition combustion engine according to at least one of the preceding claims, **characterized in that** the internal combustion engine is embodied in such a way that the charge pressure in the working cylinder at the rated torque and/or rated capacity point is greater than approximately 3.0 bar, and is preferably greater than approximately 3.5 bar or 4.0 bar absolute.

## Revendications

1. Moteur à combustion interne et autoallumage, en particulier moteur diesel, présentant au moins un turbocompresseur (ATL) entraîné par les gaz d'échappement et au moins un cylindre de travail, **caractérisé en ce que**
le moteur à combustion interne est configuré de manière à ce qu'au couple nominal et/ou au point de puissance nominal, la pression de suralimentation (32) dans le cylindre de travail soit supérieure à environ 2,5 bars absolus, la pointe de pression dans le cylindre de travail soit inférieure à environ 200 bars, la puissance spécifique soit supérieure à environ 60 kW/l, le couple spécifique du moteur soit supérieur à environ 150 Nm/l et le rapport géométrique de compression soit inférieur à environ 17:1.

2. Moteur à combustion interne et autoallumage selon la revendication 1, **caractérisé en ce que** le rapport géométrique de compression est compris entre environ 16,5:1 et 14,5:1 et est en particulier d'environ 16:1, d'environ 15,5:1 ou de 15:1.

3. Moteur à combustion interne et autoallumage selon au moins l'une des revendications précédentes, **caractérisé en ce que** le moteur à combustion interne est configuré de telle sorte qu'au point de puissance nominale, la température finale de compression soit inférieure ou égale à environ 1 127°C, de préférence inférieure ou égale à environ 927°C et en particulier inférieure ou égale à environ 727°C et qu'en même temps la température en amont de l'ATL soit inférieure ou égale à environ 800°C, de préférence inférieure ou égale à environ 830°C à 850°C et en particulier inférieure ou égale à environ 800°C.

4. Moteur à combustion interne et autoallumage selon au moins l'une des revendications précédentes, **caractérisé en ce que** le moteur à combustion interne est configuré de telle sorte qu'au point de puissance nominale, la pression finale de compression soit inférieure ou égale à environ 100 bars à 140 bars, de préférence à environ 110 bars à 120 bars et que simultanément la température en amont de l'ATL soit inférieure ou égale à environ 800°C à 850°C.

5. Moteur à combustion interne et autoallumage selon au moins l'une des revendications précédentes, **caractérisé en ce que** le moteur à combustion interne est configuré de telle sorte qu'au point de puissance nominale, la température dans la chambre de combustion soit inférieure ou égale à environ 2 127°C, de préférence inférieure ou égale à environ 1 927°C et en particulier inférieure ou égale à 1 727°C et qu'en même temps la température en amont de l'ATL soit inférieure ou égale à environ 800°C à 850°C.

6. Moteur à combustion interne et autoallumage selon au moins l'une des revendications précédentes, **caractérisé en ce qu'**au point de puissance nominale, le début de l'injection soit au plus tard entre environ 20° KW et environ 10° KW et de préférence d'environ 15° KW en avant de OT et qu'en même temps la température en amont de l'ATL soit inférieure ou égale à environ 800°C à 860°C et de préférence à environ 830°C à 850°C.

7. Moteur à combustion interne et autoallumage selon au moins l'une des revendications précédentes, **caractérisé en ce que** le moteur à combustion interne est configuré de telle sorte que la pression de pointe dans le cylindre de travail soit inférieure à environ 180 bars et de préférence soit d'environ 170 bars à 160 bars.

8. Moteur à combustion interne et autoallumage selon au moins l'une des revendications précédentes, **caractérisé en ce que** le moteur à combustion interne est configuré de telle sorte que la pression d'alimentation dans le cylindre de travail au couple nominal et/ou au point de puissance nominale soit supérieure à environ 3,0 bars, de préférence supérieur à environ 3,5 bars ou 4,0 bars en valeurs absolues.
